Europäisches Patentamt

European Patent Office

Office européen des brevets

(19)

(11) Numéro de publication: **0 272 994 B1**

## FASCICULE DE BREVET EUROPEEN

(12)

(45) Date de publication de fascicule du brevet:
**28.08.91**

(51) Int. Cl.5: **A22C 25/04, B07B 13/07**

(21) Numéro de dépôt: **87420338.3**

(22) Date de dépôt: **14.12.87**

(54) **Machine à calibrer et à trier les poissons, notamment de la famille des salmonidés.**

(30) Priorité: **15.12.86 FR 8617702**

(43) Date de publication de la demande:
**29.06.88 Bulletin 88/26**

(45) Mention de la délivrance du brevet:
**28.08.91 Bulletin 91/35**

(84) Etats contractants désignés:
**BE DE ES GB IT SE**

(56) Documents cités:
**DE-A- 1 913 477**     **DE-B- 1 151 404**
**DE-C- 205 329**       **FR-A- 1 123 973**
**FR-A- 1 273 246**     **FR-A- 1 458 348**
**FR-A- 2 278 256**     **GB-A- 745 730**
**GB-A- 1 261 781**     **US-A- 2 314 479**

(73) Titulaire: **ETABLISSEMENTS FAIVRE, Société
à Responsabilité Limitée:
7, rue de l'Industrie
F-25110 Baume Les Dames(FR)**

(72) Inventeur: **Faivre, Claude
7, rue de l'Industrie
F-25110 Baume les Dames(FR)**

(74) Mandataire: **Ropital-Bonvarlet, Claude
Cabinet BEAU DE LOMENIE, 51, avenue Jean-
Jaurès
F-69007 Lyon(FR)**

Rank Xerox (UK) Business Services

## Description

La présente invention concerne le domaine de la pisciculture et elle vise, plus particulièrement, les machines mises en oeuvre pour calibrer et trier des poissons vivants à corps oblong, tels que ceux, notamment, de la famille des salmonidés.

La pisciculture concerne l'élevage et la culture des poissons dans des bassins d'eau douce ou d'eau de mer délimitant des volumes d'évolution pour une famille de poissons amenée à se développer et à croître par apport d'une nourriture quotidiennement contrôlée.

La croissance de tels poissons implique de contrôler leur taille, soit pour les changer périodiquement de bassins dans lesquels un rapport de force convenable et/ou de masse peut être établi et doit être maintenu, soit pour répondre aux conditions de leur commercialisation.

Il est donc nécessaire de pouvoir calibrer les poissons issus d'un bassin, de façon à déterminer leur degré de croissance, mais aussi de pouvoir les trier en fonction de critères de masse ou de longueur, afin de les répartir en différentes catégories pré-établies, soit pour les placer dans des bassins où ils terminent leur croissance, soit pour répondre à des conditions de commercialisation ultérieure.

Des machines pour effectuer un tel travail sont connues. La plupart d'entre elles proposent de délimiter au moins un canal de calibrage, dont la section ouverte du fond croît depuis une entrée en direction d'une sortie, de façon à autoriser une sélection progressive en fonction de la taille des poissons amenés à cheminer à l'intérieur d'un tel canal au travers duquel ils passent, lorsque la section de passage locale correspond à leur plus grande section droite transversale.

Les poissons ayant traversé le fond ouvert du canal de calibrage sont reçus dans des casiers ou compartiments de transfert.

Pour assumer la fonction de calibrage, la technique antérieure propose plusieurs formes de réalisation d'un tel canal de calibrage.

Une solution connue consiste à délimiter le canal de calibrage par deux panneaux plans réglables en écartement relatif et aboutissant au-dessus de deux rouleaux sensiblement parallèles. Ces rouleaux, également mobiles en écartement relatif, sont entraînés en rotation opposée, de telle manière qu'un poisson pris localement entre eux ait tendance à être soulevé et rejeté vers le dessus du canal.

Dans un tel canal, en général, les poissons sont maintenus en étant engagés verticalement, la queue orientée vers le bas. La rotation opposée des rouleaux est choisie dans le sens indiqué ci-dessus pour éviter de solliciter le poisson en engagement entre les rouleaux, ce qui aurait pour effet de le contraindre de façon préjudiciable.

En réalité, une telle machine constitue une simple adaptation d'une machine initialement conçue pour calibrer des fruits. La conception de cette machine est mal adaptée au calibrage de poissons vivants qui ne sont pas suffisamment guidés et pris en charge par les rouleaux tournants. Un calibrage convenable ne peut pas être obtenu.

Une autre machine connue de l'art antérieur propose de délimiter le canal de calibrage, non pas au moyen de deux panneaux rigides, mais par l'intermédiaire de deux bandes sans fin pouvant être réglées en écartement propre.

Les bandes sont entraînées en défilement, de telle manière que, par leurs brins se faisant face, elles imposent aux poissons vivants une progression depuis l'extrémité d'entrée vers l'extrémité de sortie du canal présentant la plus grande section de passage du fond ouvert.

Un tel principe de réalisation peut être estimé comme assurant théoriquement un meilleur guidage du poisson vivant. Toutefois, les bandes d'entraînement sont des organes souples, soumis localement à des vibrations ou battements qui ne sont pas toujours synchrones et accordés. Ces battements sont responsables de variations non négligeables de la section de passage du fond ouvert qu'elles délimitent. Les résultats de calibrage sont donc aussi incertains.

Les expériences ont, égalemnt, permis de constater que les poissons de grande taille pouvaient aussi porter des traces de frottement, en raison de l'instabilité qui leur est imposée par le déplacement longitudinal des bandes sans fin. Or, des poissons ainsi atteints dans leur intégrité protectrice sont, ultérieurement, l'objet de dégradations physiques préjudiciables à leur état.

La technique antérieure connaît, encore, une autre machine dans laquelle le canal de calibrage est contitué par deux panneaux définissant une section droite transversale en "V" à fond ouvert. Dans un tel canal, une bande de pressage est entraînée en défilement longitudinal sans fin. Une telle bande possède des doigts souples qui sont engagés dans le canal, de manière à contraindre les poissons à cheminer à plat jusqu'au moment où la section de passage du fond ouvert autorise leur passage à travers le canal.

Une telle machine donne satisfaction sur le plan de la fonction devant être assumée, mais présente certains inconvénients dus, principalement, à sa structure plus complexe. Le coût de fabrication et d'entretien d'une telle machine est plus élevé que ceux des machines précédentes. Une telle machine exige un entretien précis, notamment pour ce qui concerne la tension des bandes sans fin, afin que les doigts souples soient suspendus à la hauteur convenable et entraînés en défilement à une vitesse compatible avec le séjour des poissons à l'intérieur du canal de calibrage.

La technique antérieure connaît également, par le document **FR-A-2 278 256**, un autre type de machine qui propose d'assurer la progression des poissons dans le canal de calibrage par l'intermédiaire d'une bande transporteuse sans fin, placée au-dessus du fond du canal. La bande transporteuse est munie de palettes souples réparties sur la surface extérieure de la bande pour délimiter des compartiments calibrés. Les poissons sont donc soumis à un effort vertical dû à la bande pour les contraindre à passer à travers le canal. Il en résulte un calibrage peu précis et une détérioration de la couverture protectrice des poissons, en raison de leur passage en force à travers le canal.

Au total donc, la technique antérieure n'offre pas de solutions pouvant être considérées comme totalement satisfaisantes pour assumer la fonction de calibrage et de triage de poissons vivants à corps oblong, notamment du type des salmonidés.

La présente invention vise à combler cette lacune en proposant une nouvelle machine de conception particulièrement simple, pouvant être construite à un prix de revient intéressant et n'exigeant qu'un entretien limité.

La présente invention concerne une machine à calibrer et à trier possédant un canal de calibrage dans lequel les poissons sont entraînés en cheminement forcé, selon une orientation verticale, la queue dirigée vers le bas, sans être soumis à des contraintes physiques susceptibles de détériorer la couverture protectrice que constitue l'appareil de leurs écailles imbriquées, ni sans risque de les meurtrir préjudiciablement.

Un autre objet de l'invention est de proposer des nouveaux moyens de calibrage et de triage aptes à pouvoir être montés sur des bâtis de machines traditionnelles, de façon à rendre possible une adaptation rapide et pratique de matériels existants.

Pour atteindre les objectifs ci-dessus, la machine à calibrer et à trier des poissons, du type comprenant un bâti portant, en partie basse, une cuve allongée présentant des compartiments transversaux successifs pourvus chacun d'une tubulure de sortie, et en partie haute, au moins un canal de calibrage longitudinal communiquant par son fond ouvert avec chacun des compartiments de la cuve, chaque canal de calibrage présente une section transversale réglable, croissante dans le sens de déplacement des poissons, communique à une extrémité avec un bassin de réception de poissons vivants à calibrer et à trier, et se trouve, en outre, pourvu d'un convoyeur d'entraînement sans fin assurant le déplacement des poissons dans chaque canal de calibrage,

caractérisée en ce que chaque convoyeur de déplacement associé à un canal de calibrage comprend des barres de poussée s'étendant latéralement vers l'extérieur des brins parallèles du convoyeur et en étant amenés successivement à se présenter transversalement dans la section de passage du canal et à suivre toute la longueur de ce dernier pour entraîner les poissons le long de celui-ci dans une position queue orientée vers le bas,

et en ce que chaque canal de calibrage est fermé à sa partie supérieure par des bandeaux de recouvrement équipés de rampes d'aspersion du canal.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une coupe-élévation schématique de la machine conforme à l'invention.

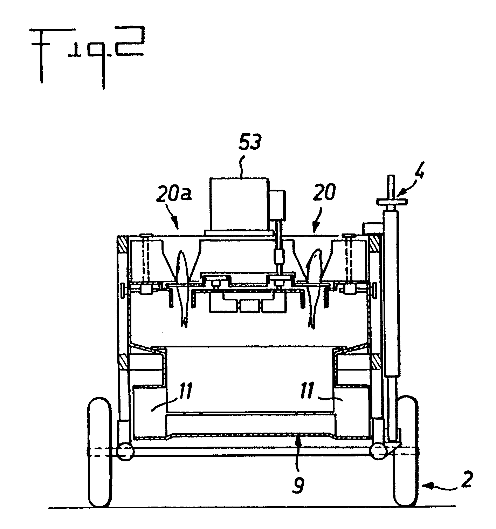

La **fig. 2** est une vue transversale prise selon la ligne II-II de la **fig. 1**.

La **fig. 3** est une vue en plan prise sensiblement selon la ligne III-III de la **fig. 1**.

La **fig. 4** est une coupe transversale, à plus grande échelle, analogue à la **fig. 2**, mais illustrant plus en détail des éléments constitutifs de l'objet de l'invention.

La machine à calibrer et à trier des poissons vivants, conforme à l'invention, comprend un bâti **1** porté par des organes de roulement **2** et **3** formant deux trains séparés. Les organes **2** sont, de préférence, associés à au moins un vérin **4** de réglage en hauteur, alors que le train **3** est pourvu d'une jambe élévatrice **5** susceptible d'être commandée en extension ou en rétraction, notamment par un vérin à vis **6**.

Les moyens techniques **2** à **6** permettent de rendre le bâti **1** autonome en roulage sur tout support ou sol convenable ou, encore, de placer le bâti **1** dans une position stable horizontale d'immobilisation, lorsque la jambe **5** prend appui sur le sol en substitution de la roue **3**.

Le bâti **1** est aussi, de préférence, associé à un timon ou analogue **7**, permettant d'accrocher la machine à un engin tracteur de tout type convenable. Le timon **7** s'étend de façon parallèle au plan médian longitudinal x-x' de la machine.

Le bâti **1** porte, à sa base, une cuve **8** réalisée en toute matière convenable et présentant un fond **9** délimitant des alvéoles successifs **10**. Chaque alvéole est pourvu de deux tubulures de sortie **11** dont les axes sont perpendiculaires au plan x-x' et qui s'ouvrent sur les deux côtés de la cuve **8**. Les tubulures **11**, ordinairement fermées par des bouchons **12**, peuvent être raccordées chacune, simultanément ou sélectivement, à une gaine ou canalisation de transfert **13**.

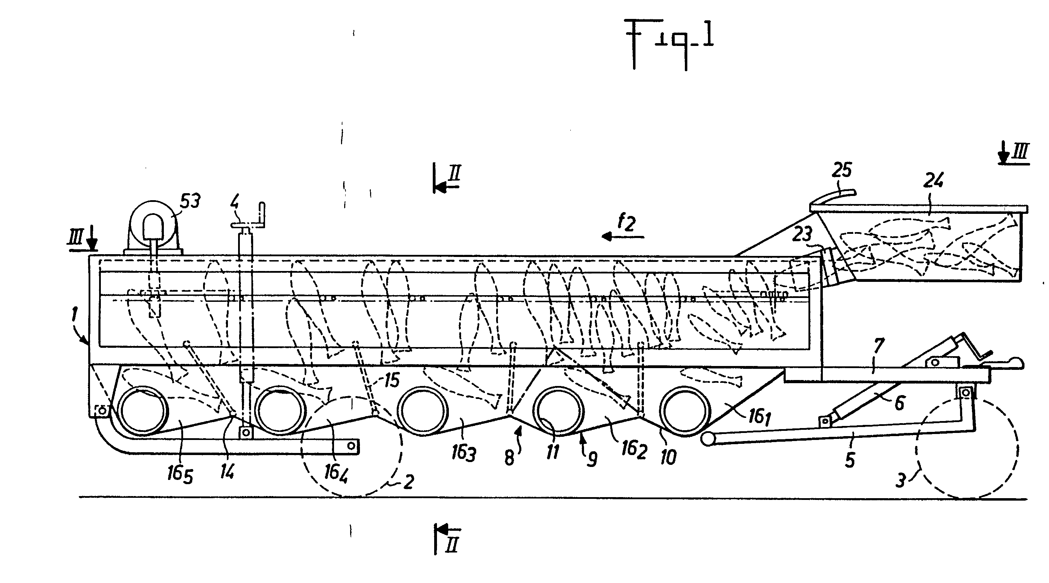

Le fond **9** comporte, sensiblement, entre chaque alvéole **10**, des moyens **14** d'articulation de cloisons **15** s'élevant sensiblement verticalement pour diviser la cuve **8** en autant de compartiments ou bacs de réception **16**. Dans le cas présent, le fond **9** de la cuve présente cinq alvéoles qui sont associés à quatre cloisons **15** permettant de délimiter, dans la cuve **8**, cinq compartiments successifs transversaux **16**₁ et **16**₅. Chaque cloison **15** est constituée par deux plaques **15**₁ et **15**₂ qui peuvent être réglées en coulissement relatif dans le double sens de la flèche **f** par une coulisse **15**₃. La plaque **15**₂ possède deux doigts supérieurs latéraux saillant pour prendre appui sur le dessus de la cuve **8**. Le réglage de la coulisse **15**₃ permet de conférer une hauteur plus ou moins grande à la cloison **15** qui, par coopération entre la cuve **8** et les doigts **17**, peut ainsi occuper une position plus ou moins inclinée dans un sens ou dans l'autre. Cette faculté de réglage d'inclinaison permet d'augmenter ou de réduire la section horizontale de réception des compartiments ou bacs **16** selon le triage de calibre à effectuer. Cette faculté permet aussi, le cas échéant, de fermer totalement un compartiment, comme illustré en traits mixtes à la **fig. 1** pour le compartiment **16**₂.

Le bâti **1** supporte, à sa partie haute, au moins un canal de calibrage **20** s'étendant de façon superposée à la cuve **8**, parallèlement au plan **x-x'** et à la succession des différents compartiments **16**₁ à **16**₅. Le nombre de canaux de calibrage **20** dépend, essentiellement, de la capacité devant être conférée à la machine et ne correspond pas à une condition critique ou essentielle de l'objet de l'invention.

Dans l'exemple illustré par les dessins, le bâti **1** supporte, en partie haute, deux canaux de calibrage **20** et **20a** qui sont réalisés de façon sensiblement identique. Pour cette raison, on ne décrit, dans ce qui suit, que les éléments constitutifs du canal **20**, étant entendu que les mêmes éléments constitutifs du canal **20a** sont désignés par les mêmes références affectées de l'indice **a**.

Le canal **20** est délimité par deux panneaux **21**, **22** en forme, disposés de façon sensiblement parallèle l'un à l'autre pour conférer au canal **20** une section en **"V"** à fond ouvert. Les panneaux en forme **21** et **22** sont raccordés par une extrémité à une goulotte de transfert **23** communiquant avec un bassin d'alimentation **24** porté par une extrémité du bâti **1**. Le bassin d'alimentation **24** est destiné à recevoir en vrac des poissons vivants à calibrer et à trier et qui sont maintenus en milieu aqueux par une arrivée d'eau permanente, complétée par une rampe d'aspersion supérieure **25** disposée sensiblement à l'aplomb de l'entrée de la goulotte **23**.

Les panneaux en forme **21** et **22** sont associés à des moyens de réglage en écartement relatif, de manière à pouvoir délimiter un canal de calibrage **20** présentant une section de fond ouvert croissant progressivement, depuis l'extrémité raccordée à la goulotte **23**, jusqu'à l'extrémité opposée qui est fermée par une paroi **26**.

Les moyens de réglage en écartement relatif font, de préférence, intervenir un panneau **21** à position fixe, et un panneau **22** monté avec possibilité de déplacement transversal, dans l'un ou l'autre sens de la flèche **f**₁, sur une console **27** formée par un retour supérieur des parois latérales **28** de la cuve **8**. Le panneau en forme **22** est muni, à sa base, d'un écrou **29** coopérant, en permanence, avec une vis **30** pouvant être commandée, depuis l'extérieur de la paroi **28**, par un bouton moleté **31**. En manoeuvrant la vis **30**, dans l'un ou l'autre sens, l'écrou **29** est déplacé dans le sens correspondant et entraîne le panneau en forme **22** dans le même sens. Un moyen de blocage **32**, agissant sur l'écrou **29**, est prévu pour immobiliser localement le panneau **22**. Le moyen **32** peut consister en une vis **33** manoeuvrable par un bouton **34** accessible sur le dessus de la machine.

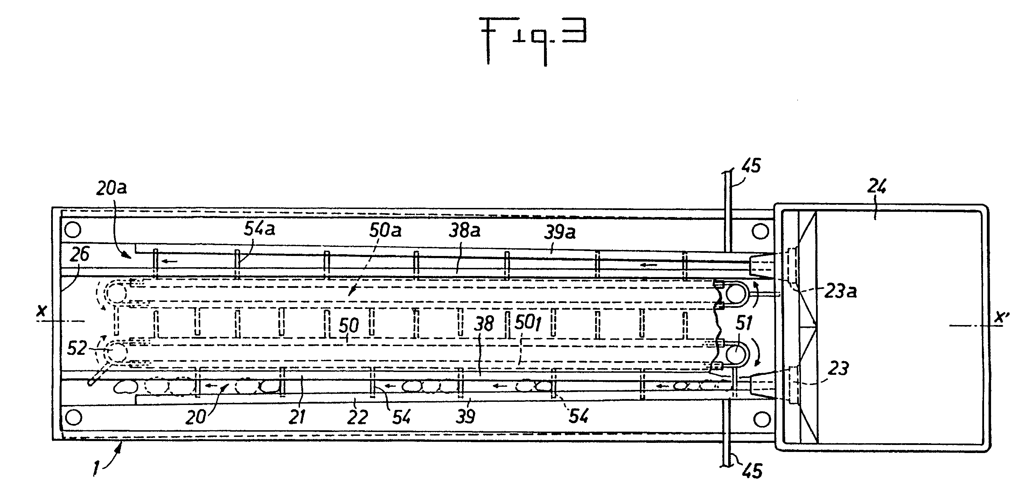

Des moyens de réglage et de blocage **29** à **31**, d'une part, et **32** à **34**, d'autre part, sont prévus en couple, répartis sur la longueur du panneau **22** et, de préférence, au moins mis en place à proximité des extrémités dudit panneau, comme cela ressort de la **fig. 3**.

Le canal de guidage **20** est complété par deux jupes de guidage **35** et **36** qui s'étendent, de façon sensiblement verticale, sous les panneaux **21** et **22** auxquels elles sont associées pour être, respectivement, fixe et mobile. Les jupes **35** et **36** sont, de préférence, constituées par des règles rigides placées sur chant. Les bords longitudinaux supérieurs des règles **35** et **36** s'étendent à distance du fond ouvert du canal **20** avec lequel ils ménagent un intervalle **37** dont la fonction apparaît dans ce qui suit.

Le canal **20** est, par ailleurs, associé à des rampes d'aspersion permanente **38** et **39** qui sont constituées par des conduits tubulaires montés par des organes de réglage en position verticale **40**, **41** sur des ailes **42** et **43** prolongeant les panneaux en forme **21** et **22**. Les conduits **38** et **39** sont raccordés, comme cela ressort de la **fig. 3**, à des canalisations **44** et **45** d'arrivée d'eau sous pression. Les conduits **38** et **39** sont munis, à leur base, de deux bandeaux **46** et **47**, du type à recouvrement fermant la partie supérieure du canal **20**.

Outre les moyens de calibrage ci-dessus, la machine conforme à l'invention est associée à des moyens d'entraînement en cheminement forcé des poissons dans le canal **20**, dans le sens de la flèche **f**₂ **(fig. 1)**. Ces moyens comprennent un convoyeur sans fin **50** entourant deux roues de renvoi **51** et **52**, respectivement menée et menante, et portées par une poutre centrale $1_1$ du bâti **1** sur laquelle sont, de préférence, montées les jupes fixes **35**. Les roues **51** et **52** peuvent être constituées par des roues à chaîne, des engrenages ou des poulies, selon la nature du convoyeur sans fin **50**. La roue menante **52** est entraînée en rotation, par l'intermédiaire d'un groupe moto-réducteur **53** porté par le bâti **1**.

Le convoyeur **50** est pourvu de barres de poussée **54** s'étendant latéralement vers l'extérieur, de manière à occuper une direction perpendiculaire à celle des brins parallèles s'étendant entre les roues **51** et **52**. Les barres de poussée **54** ont ainsi tendance à être déplacées, dans le sens de la flèche $f_2$, en occupant une direction transversale au canal de calibrage **20**.

Le plan, occupé par le convoyeur **50**, est choisi de telle manière que les barres de poussée **54**, appartenant au brin du convoyeur adjacent au canal **20**, soient astreintes au déplacement dans l'intervalle **37** ménagé entre le fond ouvert du canal **20** et les bords longitudinaux supérieurs des jupes **35** et **36** qui constituent des glissières d'appui sur lesquelles reposent les barres de poussée **54**.

Ainsi que cela apparaît à la **fig. 3**, les barres de poussée **54** divisent le volume du canal de guidage **20** en un certain nombre de compartiments qui deviennent mobiles, en progressant dans le sens de la flèche $f_1$ lors de la mise en marche du convoyeur. Le nombre de compartiments internes est toujours égal et fait intervenir l'apparition d'un compartiment se développant à partir de l'extrémité raccordée à la goulotte de transfert avec, simultanément, la disparition d'un autre compartiment s'effaçant de l'extrémité opposée.

La machine décrite ci-dessus fonctionne de la manière suivante.

Les poissons à calibrer et à trier sont déversés dans le bassin **24** à partir duquel ils s'engagent, à travers la goulotte **23**, dans le canal **20**. Par la forme des panneaux **21** et **22**, les poissons vivants sont, naturellement, sollicités en engagement par la queue tournée vers le bas, à travers le fond ouvert du canal **20** dans lequel ils sont maintenus, si leur plus grande section droite transversale est supérieure à la section de passage locale du canal **20**. La **fig. 1** montre que les poissons, ne répondant pas à cette condition, traversent librement la section de passage locale du canal **20** et tombent dans le bac ou compartiment de réception $16_1$, à partir duquel ils peuvent être évacués par la tubulure **11**, pour être redirigés vers un bassin de croissance, par exemple.

Le chargement des poissons dans le bassin d'alimentation **24** est effectué avec fourniture permanente d'eau circulant, de telle manière que les poissons puissent être maintenus dans le canal **20** et puissent chuter dans les compartiments **16**, sans baigner entièrement dans leur milieu naturel, mais en étant, toutefois, toujours maintenus en contact avec ce milieu. Une arrivée d'eau supplémentaire peut être assurée dans chaque compartiment **16**, de manière que le transfert des poissons calibrés et triés reçus puisse être assuré en immersion quasi complète.

Les barres de poussée **54**, entraînées en déplacement dans le sens de la flèche $f_2$, poussent les poissons, engagés comme dit précédemment, en direction de la plus grande section de passage du fond ouvert du canal **20**.

Un certain nombre de poissons sont donc pris en charge entre deux barres de poussée **54** successives qui en assurent la progression sans à-coup et sans contrainte, étant donné que leur écartement relatif est choisi pour que le nombre de poissons concernés soit limité.

Au cours de leur progression dans le canal **20**, les poissons sont aspergés par les rampes **38** et **39** qui leur assurent un maintien permanent en contact avec le milieu liquide, chargé de faciliter leur glissement entre les panneaux **21** et **22**. Au fur et à mesure de la progression, la section de passage offerte par le fond ouvert du canal **20** croît. Les poissons, dont la section droite transversale devient inférieure à la section de passage locale, traversent le fond ouvert et sont reçus dans le bac **16** sous-jacent.

Tous les poissons, répondant à un calibre donné, sont ainsi amenés à traverser librement le canal **20** dans une zone de ce dernier précisément définie, de sorte que tous ces poissons sont reçus dans le même compartiment ou bac de réception **16**, capable d'en assurer le transfert en direction de bassins de transport ou de croissance. Il devient ainsi possible de déterminer un triage de calibres différents reçus dans les compartiments successifs, dans chacun desquels les poissons présentent une faible dispersion du calibre de sélection. Le réglage des panneaux **21** et **22** est déterminé pour que la dernière zone de triage, correspondant au bac $16_5$, soit en correspondance avec la taille maximale des poissons du lot à calibrer et à trier.

Etant donné la forme des panneaux **21** et **22**, la présence permanente de veines ou lames d'eau d'aspersion et la poussée exercée par les barres **54** agissant par simple contact, les poissons, admis dans le canal **20**, peuvent être déplacés progressivement sans risque de meurtrissure ou de contrainte préjudiciable à leur état physique. La prise en charge par les barres de poussée s'effectue, de préférence, immédiatement en-dessous du fond ouvert, c'est-à-dire dans un plan où le centre de gravité du poisson est situé suffisamment bas, en fonction de sa longueur, pour éviter tout risque de basculement ou de retournement. Une progression en position sensiblement verticale, la queue tournée vers le bas, peut donc intervenir pour un nombre donné de poissons, même de gabarits différents, occupant un même compartiment de cheminement matérialisé par deux barres de poussée successives. La chute de chaque poisson s'effectue dans des conditions de guidage maximales, étant donné la présence des jupes 35 et 36 prolongeant le canal de calibrage 20.

La fonction assumée par le canal 20 est donc d'assurer le calibrage, selon plusieurs calibres, de poissons déversés de façon aléatoire dans le bassin 24. La position du canal 20, au-dessus de la succession des compartiments 16, permet un triage de ces calibres, afin de disposer de lots de poissons homogènes en taille et en poids.

Dans l'exemple illustré, la machine comporte deux canaux de calibrage 20 et 20a qui sont associés à deux convoyeurs 50 et 50a, disposés parallèlement entre eux, entre les canaux 20 et 20a. Dans un tel cas, il peut être avantageux de ne prévoir qu'un seul groupe moteur 53 agissant, par l'intermédiaire d'une seule transmission 60, sur l'un des convoyeurs relié à l'autre, par l'intermédiaire de renvois d'angles 61 et 62 portés par la poutre 1₁ sur laquelle sont montées les jupes fixes 35 et 35a. Les convoyeurs 50 et 50a sont alors entraînés en défilement, dans des sens inverses, de manière que les brins actifs adjacents aux canaux 20 et 20a soient entraînés en défilement dans le même sens.

La fig. 3 permet de remarquer que, dans un tel cas, les convoyeurs 50 et 50a sont décalés relativement de la moitié du pas d'écartement entre les barres de poussée 54.

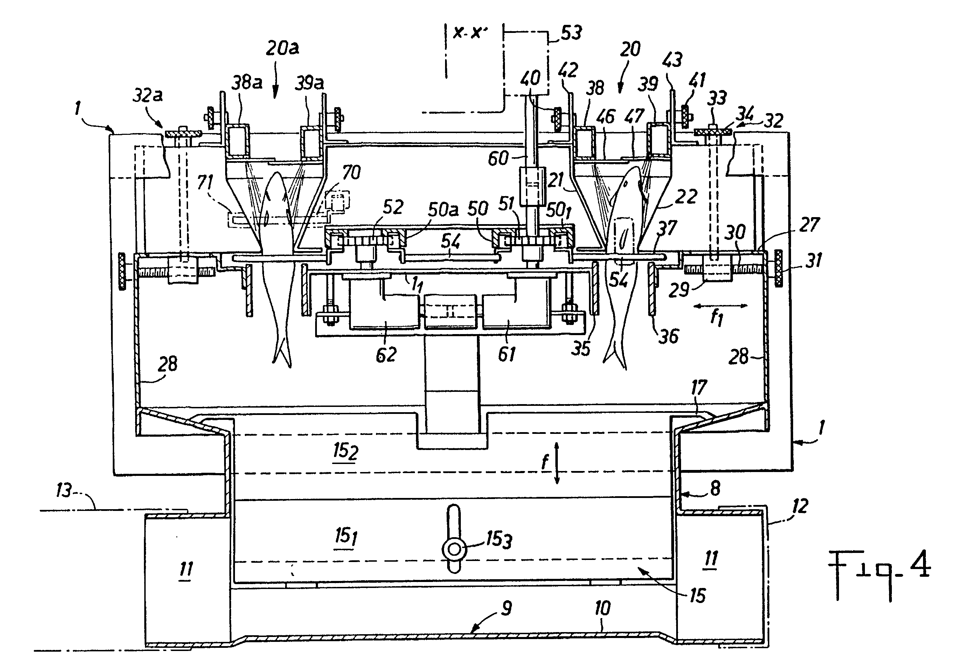

La fig. 4 illustre, en traits mixtes et pour ce qui concerne le canal de calibrage 20a, une variante de réalisation selon laquelle les barres de poussée 54 se déplacent dans un plan superposé au fond ouvert du canal. Dans un tel cas, le panneau fixe 21a présente, sur toute sa longueur, une lumière de passage 70 coïncidant, dans un plan sensiblement horizontal, avec un dégagement 71 résultant de la conformation du panneau mobile 22a.

Ainsi que cela ressort de ce qui précède, la machine à calibrer et à trier les poissons vivants est d'une conception particulièrement simple et robuste et peut être fabriquée à un prix de revient intéressant, sans nécessiter d'opérations d'entretien particulièrement délicates.

La construction selon l'invention permet de réaliser une machine de faible hauteur, offrant une sécurité absolue pour les poissons qui sont empêchés de sauter verticalement par la présence des bandeaux à recouvrement 46 et 47 fermant le dessus de chaque canal.

En outre, les moyens de cheminement et d'entraînement en cheminement sont constitués par des surfaces n'exerçant aucune contrainte physique sur des poissons qui sont maintenus en contact permanent avec leur milieu liquide naturel assumant à l'intérieur des canaux une fonction de fluide de glissement réduisant les frottements et les risques de blessure.

Bien que cela ne soit pas représenté, il est évident qu'une machine conforme à l'invention pourrait comporter plus de deux canaux 20 prévus en un nombre impair ou pair et, dans un tel cas, organisés en groupement fonctionnel pour chacune d'elles, notamment par l'intermédiaire d'un groupe moto-réducteur 53 d'une transmission 60 et des moyens d'entraînement conjugués des deux convoyeurs.

Un autre avantage de l'objet de l'invention réside dans la possibilité d'assurer l'adaptation des moyens principaux de l'invention sur des machines existantes.

## Revendications

1. Machine à calibrer et à trier des poissons, notamment de la famille des salmonidés, du type comprenant un bâti (1) portant, en partie basse, une cuve allongée (8) présentant des compartiments transversaux successifs (16) pourvus chacun d'une tubulure de sortie (11), et en partie haute, au moins un canal de calibrage (20) longitudinal communiquant par son fond ouvert avec chacun des compartiments de la cuve, chaque canal de calibrage (20) présente une section transversale réglable, croissante dans le sens de déplacement des poissons, communique à une extrémité avec un bassin de réception (24) de poissons vivants à calibrer et à trier, et se trouve, en outre, pourvu d'un convoyeur d'entraînement sans fin (50) assurant le déplacement des poissons dans chaque canal de calibrage (20),

   caractérisée en ce que chaque convoyeur de déplacement (50) associé à un canal de calibrage comprend des barres de poussée (54) s'étendant latéralement vers l'extérieur des brins parallèles du convoyeur et en étant amenés successivement à se présenter transversalement dans la section de passage du canal et à suivre toute la longueur de ce dernier pour entraîner les poissons le long de celui-ci dans une position queue orientée vers le bas,

   et en ce que chaque canal de calibrage (20) est fermé à sa partie supérieure par des bandeaux de recouvrement (46, 47) équipés de rampes d'aspersion (38, 39) du canal.

2. Machine selon la revendication 1, caractérisée en ce que le canal de calibrage (20) est constitué par deux panneaux en forme lui conférant une section droite transversale en "V", l'un des panneaux (**21**) étant fixé, tandis que l'autre panneau (**22**) est mobile et se trouve associé à des organes (**29** à **31**) de réglage en écartement par rapport au panneau fixe.

3. Machine selon la revendication 1 ou 2, caractérisée en ce que le fond ouvert du canal de calibrage est prolongé vers le bas par des jupes de guidage (**35, 36**) dont celle associée au panneau mobile est assujettie aux mêmes organes de réglage en écartement.

4. Machine selon l'une des revendications 1 à 3, caractérisée en ce que chaque panneau (**21, 22**) porte un conduit d'aspersion (**38, 39**) en relation avec une arrivée d'eau (**45**) portant à sa base un bandeau à recouvrement et monté sur le panneau par des organes de réglage en hauteur (**40, 41**).

5. Machine selon l'une des revendications 1 à 3, caractérisée en ce que le canal de calibrage (**20**) est associé à un convoyeur (**50**) dont les barres de poussée (**54**) se déplacent, lors de leur passage à travers le canal, entre le fond ouvert de ce dernier et les jupes (**35, 36**) qui forment règles d'appui pour lesdites barres.

6. Machine selon l'une des revendications 1 à 3, caractérisée en ce que le canal de calibrage (**20**) est associé à un convoyeur (**50**) dont les barres de poussée (**54**) se déplacent lors de leur passage à l'intérieur du canal, à travers une lumière (**70**) du panneau fixe (**21**) et dans un logement-dégagement (**71**) présenté par le panneau mobile (**22**), le logement et la lumière étant situés dans un plan commun superposé au fond ouvert du canal.

7. Machine selon la revendication 1, caractérisée en ce qu'elle comprend au moins deux canaux de calibrage (**20, 20a**) s'étendant parallèlement entre eux depuis le bassin de réception, en étant séparés par deux convoyeurs (**50, 50a**) entraînés en défilement dans des sens différents, à partir d'un même organe moteur (**53**) par deux renvois d'angle (**61, 62**).

8. Machine selon la revendication 7, caractérisée en ce que les deux convoyeurs sont portés par une poutre centrale (**1₁**) portant les jupes des panneaux fixes (**35**).

9. Machine selon la revendication 1, caractérisée en ce que les compartiments (**16**) sont délimités transversalement par des cloisons (**15**) réglables en hauteur et en inclinaison.

**Claims**

1. Machine for grading and sorting fish, in particular fish from the Salmonidae family, of the type comprising a frame (1), supporting at its lower part, an enlongated tank (8), comprising successive transversal compartments (16), each one being provided with an outlet tube (11), and with each one of which communicates, by its open lower end, at least one longitudinal grading channel (20) situated at the upper part of the frame, each grading channel (20) having an adjustable cross-section, increasing in the fish-advancing direction, and communicating at one end with a tank (24) admitting live fish to be graded and sorted, each grading channel being further provided with an endless conveyor (50) which ensures the displacement of the fish in each grading channel (20), characterized in that each endless conveyor (50) associated to a grading channel comprises thrust bars (54) extending laterally outwardly of the parallel sides of the conveyor and being caused successively to arrive in transversal position in the channel passage section and to follow the entire length thereof in a downwardly oriented tail position, and in that each grading channel (20) is closed at its upper part by overlapping plates (46,47) equipped with spraying ramps (38,39) for spraying said channel.

2. Machine according to claim 1, characterized in that the grading channel (20) is constituted by two panels shaped so as to have a "V" cross-section , one of the panels (21) being fixed, while the other panel (22) is movable and is associated to means (29 to 31) for adjusting the spacing of the latter with respect to said fixed panel.

3. Machine according to claim 1 or 2, characterized in that the open end of the grading channel is extended downwardly by guiding skirts (35,36) of which that which is associated to the movable panel is controlled by the same spacing adjusting members.

4. Machine according to one of claims 1 to 3, characterized in that each panel (21,22) is equipped with a spraying conduit (38,39) connected to a water intake (45) provided at its base with an overlapping plate and mounted on the panel via height adjusting means (40,41).

5. Machine according to one of claims 1 to 3, characterized in that the grading channel (20) is associated to a conveyor (50) of which the thrust bars (54) move, while passing through the channel, between the open bottom of the latter and the skirts (35,36) which form support plates for said bars.

6. Machine according to one of claims 1 to 3, characterized in that the grading channel (20) is associated to a conveyor (50) of which the thrust bars (54) move, while passing through the channel, through a slot (70) of the fixed panel (21) and in a housing-clearance (71) provided in the movable panel (22), the housing and the slot being situated in a common plane superposed to the open bottom of the channel.

7. Machine according to claim 1, characterized in that it comprises at least two grading channels (20,20a) extending in parallel relationship from the receiving tank, while being separated by two conveyors (50,50a) driven forward in different directions, from the same driving member (53) via two bevel gears (61,62).

8. Machine according to claim 7, characterized in that the two conveyor belts are carried by a central beam (11) carrying the skirts of the fixed panels (35).

9. Machine according to claim 1, characterized in that the compartments (16) are transversely defined by walls (15) adjustable in height and inclination.

**Patentansprüche**

1. Maschine zum Kalibrieren und Sortieren von Fischen, insbesondere von lachsartigen Fischen mit einem Gehäuse (1), das in seinem unteren Teil eine lange Wanne (8) trägt, die hintereinander angeordnete und quer orientierte Kammern (16) aufweist, die jede mit einem Ausgangsrohr (11) versehen ist und das in seinem oberen Teil mindestens einen längsorientierten Kalibrierkanal (20) aufweist, dessen Boden mit jeder der Kammern der Wanne in Verbindung steht, wobei jeder Kalibrierkanal (20) eine einstellbare Querschnittsfläche aufweist, die in Richtung der Bewegung der Fische grösser wird, wobei der Kalibrierkanal an einem Ende mit einem Bassin (24) zur Aufnahme lebender, zu kalibrierender und sortierender Fische in Verbindung steht und der andererseits mit einer Endlosfördereinrichtung (50) versehen ist, die die Bewegung der Fische in jedem der Kalibrierkanäle (20) gewährleistet, dadurch **gekennzeichnet, daß**

jede Fördereinrichtung (50), die zu einem Kalibrierkanal gehörig ist, Schiebestangen (54) aufweist, die sich quer außerhalb der parallelen Seile der Transporteinrichtung erstrecken und aufeinanderfolgend quer in den Durchgangsbereich des Kanals geführt werden und dessen gesamte Länge durchlaufen, um die Fische entlang des Kanals in einer Position, bei der der Schwanz nach unten ausgerichtet ist, zu bewegen, und dadurch, daß jeder Kalibrierkanal (20) in seinem oberen Bereich durch Abdeckbänder (46, 47) geschlossen ist, die mit Berieselungseinrichtungen (38, 39) des Kanals versehen sind.

2. Maschine nach Anspruch 1, dadurch gekennzeichnet, daß der Kalibrierkanal (20) aus zwei Platten besteht, die diesem im Querschnitt die Form eines "V" geben, wobei eine der Platten (21) feststeht, wohingegen die andere Platte (22) beweglich ist und mit Einstellorganen (29-31) zur Einstellung des Abstands bezüglich der festen Platte versehen ist.

3. Maschine nach Anspruch 1 oder 2, dadurch gekennzeichnet, daß der offene Boden des Kalibrierkanals nach unten durch Führungsschürzen (35, 36) verlängert ist, wobei die zu der beweglichen Platte gehörende Schürze dem gleichen Abstandseinstellorgan unterworfen ist.

4. Maschine nach einem der Ansprüche 1 bis 3, dadurch gekennzeichnet, daß jede Platte (21, 22) eine Berieselungsleitung (38, 39), die mit einer Wasserquelle (45) verbunden ist, aufweist und die an ihrer Bodenfläche ein Abdeckband aufweist und die an der Platte mittels Höheneinstellorganen (40, 41) angebracht ist.

5. Maschine nach einem der Ansprüche 1 bis 3, dadurch gekennzeichnet, daß der Kalibrierkanal (20) mit einer Transporteinrichtung (50) verbunden ist, dessen Schiebestangen (54) sich während ihres Durchgangs über den Kanal zwischen dem offenen Boden des letzteren und den Schürzen (35, 36) bewegen, die eine Auflagefläche für die Stangen bilden.

6. Maschine nach einem der Ansprüche 1 bis 3, dadurch gekennzeichnet, daß der Kalibrierkanal (20) an einer Transporteinrichtung (50) angebracht ist, dessen Schiebestangen (54) sich während deren Durchgang durch das Innere des Kanals durch ein Langloch (70) der festen Platte (21) und in einem Lager (71) bewegen, das durch die bewegliche Platte (22) dargestellt wird, wobei das Lager und das Langloch in einer gemeinsamen Ebene über dem offenen Boden des Kanals angeordnet sind.

7. Maschine nach Anspruch 1,
gekennzeichnet durch
mindestens zwei Kalibrierkanäle (20, 20a), die sich parallel zueinander vom Aufnahmebecken ausgehend erstrecken und durch zwei Transporteinrichtungen (50, 50a) getrennt sind, die in unterschiedlichen Bewegungsrichtungen angetrieben sind, ausgehend von denselben Antriebsorganen (53) mittels zweier Winkelvorgelege (61, 62).

8. Maschine nach Anspruch 7,
dadurch gekennzeichnet, daß
die beiden Transporteinrichtungen von einem zentralen Träger ($1_1$) getragen werden, der ebenfalls die Schürzen der festen Platten (35) trägt.

9. Maschine nach Anspruch 1,
dadurch gekennzeichnet, daß
die Kammern (16) quer mittels Trennwänden (15) begrenzt sind, die in ihrer Höhe und Neigung einstellbar sind.

Fig.1

EP 0 272 994 B1

Fig.2

Fig.3

EP 0 272 994 B1

Fig. 4